# EUROPEAN PATENT SPECIFICATION

(11) **EP 1 492 101 B1**
(45) Date of publication and mention of the grant of the patent: **30.08.2006**
(21) Application number: 04253560.9
(22) Date of filing: 15.06.2004
(51) Int. Cl.: G11B 7/24

(54) **Optical disc with super-resolution near-field structure**
Optische Platte mit einer hochauflösenden Nahfeldstruktur
Disque optique doté d'une structure de champ proche à super résolution

(30) Priority: 23.06.2003 KR 2003040687
(43) Date of publication of application: 29.12.2004
(73) Proprietor: SAMSUNG ELECTRONICS CO., LTD., Suwon-si, Gyeonggi-do (KR)
(72) Inventor: Kim, Hyun-Ki, Taean-eup Hwaseong-si Gyeonggi-do (KR); Hwang, In-oh, Bundang-gu Seongnam-si Gyeonggi-do (KR); Ahn, Yong-jin, Seocho-gu Seoul (KR)
(74) Representative: Robinson, Ian Michael

(56) References cited:
- EP-A- 1 039 448
- US-A1- 2001 026 856
- US-A1- 2002 150 716
- JPN. J. APPL. PHYS., vol. 42, February 2003 (2003-02), pages 1038-1039, XP002303724

## Description

The present invention relates to an optical disc, and more particularly, to an optical disc incorporating a super-resolution near-field structure (Super-RENS), designed to record and reproduce marks with a size below a resolution limit of a laser beam.

Optical discs are the most widely used high-density recording media since they require a much smaller recording area per recording unit than magnetic recording media. The optical discs are classified into three basic types according to their function: read-only memory (ROM) where recorded information is only read, write-once read-many (WORM) where data can be written once, and rewritable (RW) where data can be fully recorded, erased, and rerecorded.

One example of a WORM disc is a compact disc recordable (CD-R). In a CD-R, when a 780 nm recording laser heats a recording layer made of cyanine or phthalocyanine organic dye, the heat causes decomposition of the dye layer and deformation of the surface of a substrate and a reflective layer. CD-R media are optical discs used to read a recorded signal at a low power of usually less than 1 mW. With a recording capacity of about 650 MB, they are widely used to write and read various types of data such as data, music, and video.

However, the capacities of CD-R or CD-RW media using the 780 nm recording wavelength are insufficient for storing motion pictures and high volume data for complex multimedia applications. A solution overcoming this problem is the digital versatile disc (DVD), which uses a 630 to 680 nm short wavelength laser and offer storage capacities of 2.7 to 4.7 GB per side. DVDs may be divided into three basic types: read-only type (DVD-ROM), write-once type (DVD-R), and rewritable type (DVD-RAM, DVD+RW, and DVD-RW). While recording on DVD-R discs is accomplished by deforming and decomposing a recording layer by laser radiation emitted from a recording laser, recording on DVD-RAM and DVD-RW media is accomplished by changing optical properties due to phase transition of the recording layer. In particular, DVD-R media employing organic dye are receiving considerable attention due to their advantages over DVD-RAM in terms of compatibility, price, and capacity.

Capacity is an issue of great concern to various emerging recordable media (write-once and rewritable). Various approaches have been proposed to increase the capacity. The recording capacity of an optical disc greatly relies upon how densely and precisely readable small pits are packed into a given area as well as the characteristics of a laser beam that can read those pits.

A beam emitted from a laser diode and focused through an objective lens cannot be made infinitely smaller due to the effect of diffraction. On the contrary, the beam has a finite width called a diffraction limit. Where the wavelength of a light source is λ and a numerical aperture (NA) of an objective lens is NA in a typical optical disc, the limit of reading resolution is λ/4NA. As shown in this relationship, using a shorter wavelength light source or a higher NA objective lens can increase the recording capacity of the disc.

However, the current laser technology poses a limitation in providing a shorter wavelength laser. Also, the manufacturing costs are too high to manufacture a high NA objective lens. Furthermore, since a working distance between a pickup and a disc significantly decreases with increasing NA of the objective lens, there is a greater risk of damaging the disc surface and data due to a collision between the pickup and the disc.

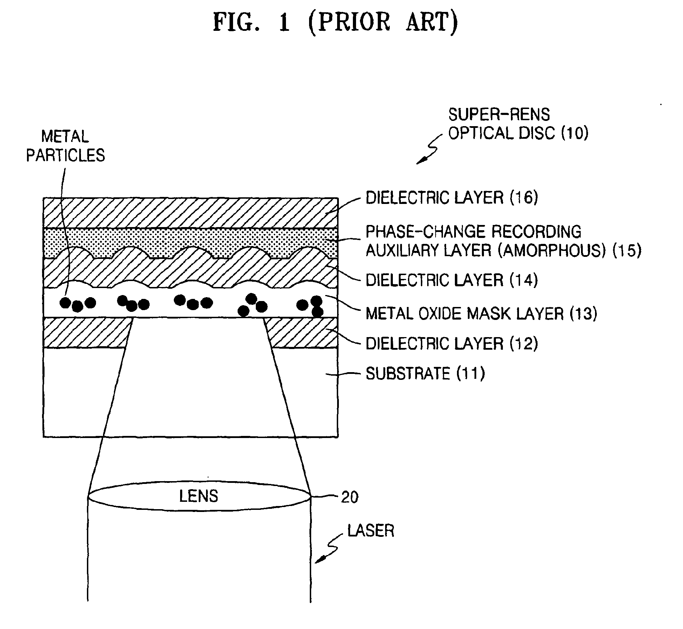

To overcome the limit of reading resolution, research into a Super-RENS optical disc has been conducted in recent years. In particular, research on a scattering type Super RENS is being actively conducted. Figure 1 illustrates a schematic structure of a conventional Super-RENS optical disc 10. As shown in Figure 1, the conventional Super-RENS optical disc 10 mainly uses a mask layer 13 made from metal oxide such as silver oxide (AgOₓ) and palladium oxide (PdOₓ).

Recent electron microscopic analysis on the cross-section of a Super-RENS optical disc disclosed that a metal oxide thin film used as a mask layer is decomposed during recording thus transforming the thin film and creating recording marks thereon while generating plasmons in metal particles formed during recording, thus allowing marks with a size below the resolution limit to be successfully reproduced (Kikukawa, Applied Physics Letters, 81(25), pp4697-4699) (Dec. 16, 2002).

Meanwhile, a phase-change recording auxiliary layer 15 used in the conventional Super-RENS optical disc 10 is made of a Ge-Sb-Te or Ag-In-Sb-Te based alloy that becomes amorphous immediately after formation of the alloy thin film. Since reflectivity is too low when the phase-change recording auxiliary layer 15 is in the amorphous state, stable focusing or tracking servo cannot be achieved. If reflectivity is increased to achieve stable servo by adjusting the thickness of a multi-layer thin film, the reflectivity becomes too high in the crystalline state to achieve the desired recording sensitivity since a large amount of incident beam is reflected during recording. Thus, when the phase-change recording auxiliary layer 15 made of Ge-Sb-Te or Ag-In-Sb-Te is in amorphous state, the disc must be initialized to crystalline state before recording.

An initialization process, which is one of the most time consuming operations during optical disc production, may result in increased disc price and reduced yield. Furthermore, insufficient initialization may lead to recording of unstable or uneven signals.

Upon recording on the disc that has undergone the initialization process, the metal oxide mask layer 13 decomposes to form marks, and at the same time the phase-change recording auxiliary layer 15 is melted and then rapidly quenched into the amorphous state. In this case, to achieve super-resolution, a high power reading beam heats the phase-change recording auxiliary layer 15 to change it from the amorphous state to the crystalline state.

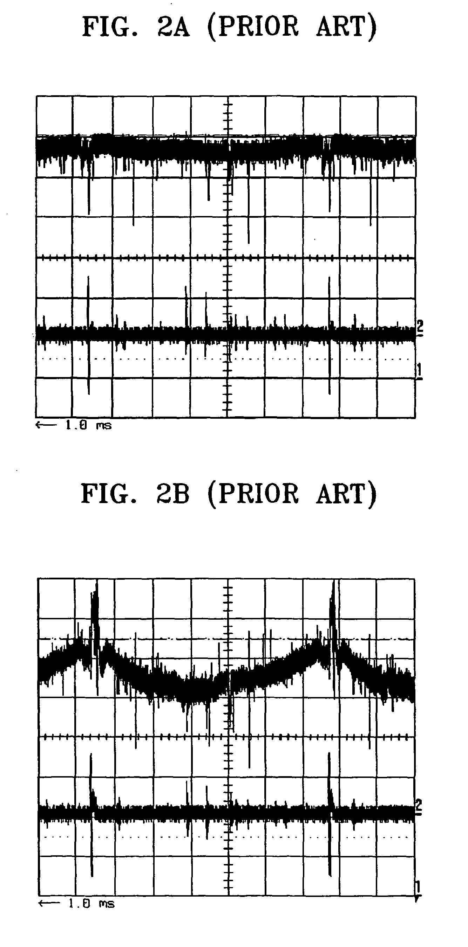

Defective crystallization of the phase-change recording auxiliary layer 15 also may make a signal uneven or unstable. Figures 2A and 2B show the degradation of an RF signal reproduced when no data is recorded in case of insufficient crystallization. More specifically, Figures 2A and 2B show RF signals reproduced at laser powers of 2 and 3 mW after initialization without recording, respectively. This demonstrates the fact that initialization of the phase-change recording auxiliary layer 15 was incomplete due to its low crystallization rate.

Similarly, when a high readout power is applied to obtain the best carrier-to-noise (C/N) ratio upon reproducing an RF signal after data has been recorded, incomplete crystallization of the phase-change recording auxiliary layer 15 causes degradation of the RF signal over time, which worsens the C/N ratio and jitter characteristics.

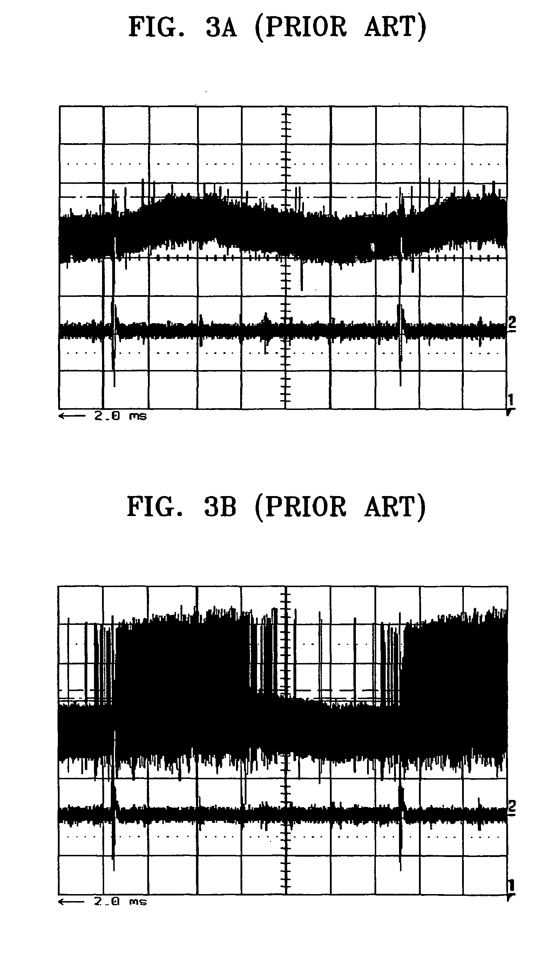

Figures 3A and 3B show the degradation of an RF signal reproduced after data has been recorded in case of insufficient crystallization. Figure 3A shows an RF signal reproduced at a laser power of 2.5 mW immediately after data has been recorded while Figure 3B shows an RF signal reproduced at a laser power of 2.5 mW after a predetermined period of time has passed since data was recorded, for example 10 minutes.

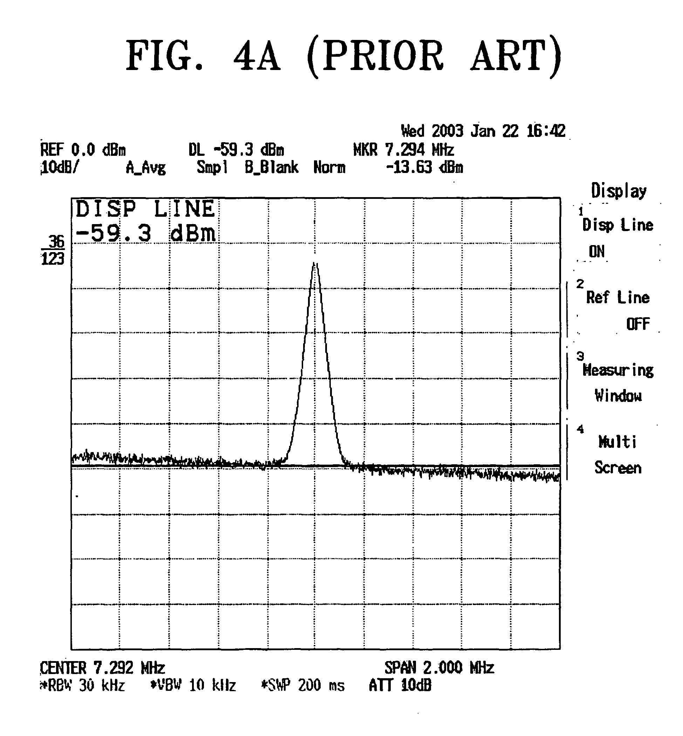

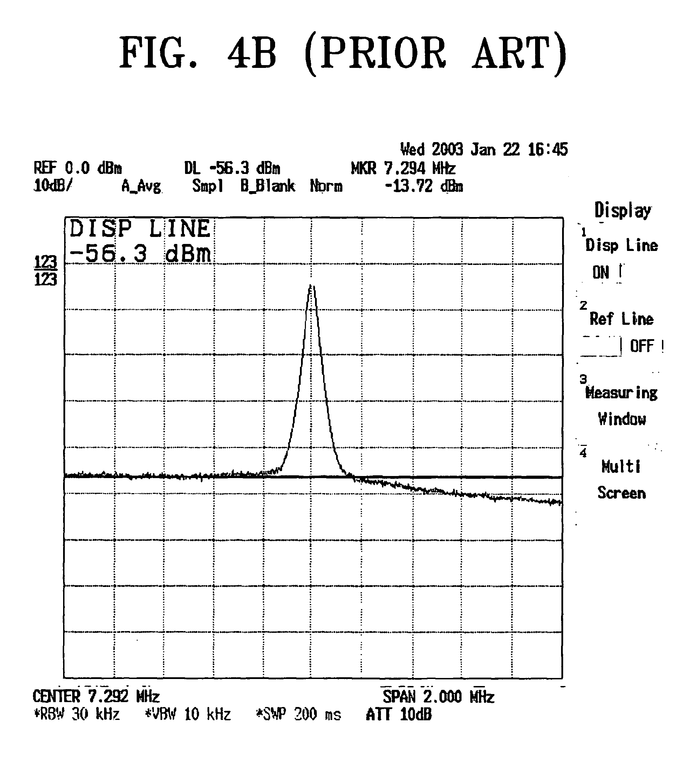

Figures 4A and 4B illustrate a decrease in C/N ratio due to an increase in noise. In Figure 4A, a noise level is -59.3 dB, and as shown in Figure 4B, the noise level increases to -56.3 dB although a carrier level remains constant after time for reproduction has passed. Thus, increased noise level decreases the C/N ratio, which is obtained by subtraction of a noise level from a carrier level.

According to the present invention there is provided an apparatus and method as set forth in the appended claims. Preferred features of the invention will be apparent from the dependent claims, and the description which follows.

An aspect of the present invention provides an optical disc with a super-resolution near-field structure (Super-RENS) designed to allow high quality signal reproduction by eliminating instability and unevenness of a reproduced signal due to insufficient crystallization during reproduction after recording data as well as low manufacturing costs and high production yields.

According to an aspect of the present invention, there is provided an optical disc having multi-layers formed on a substrate on which a beam writes information. The optical disc may include one or more mask layers having a super-resolution near-field structure and one or more phase-change recording auxiliary layers, having been deposited as a highly crystalline material. The phase-change recording auxiliary layer is in a crystalline state after being formed. The highly crystalline material may be antimony telluride (Sb₂Te₃) or Sb.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a schematic diagram of a conventional optical disc having a super-resolution and near-field structure (Super-RENS);
Figures 2A and 2B show the degradation of an RF signal reproduced when no data is recorded in case of insufficient crystallization of a conventional phase-change recording auxiliary layer;
Figures 3A and 3B show the degradation of an RF signal reproduced after data has been recorded in case of insufficient crystallization of a conventional phase-change recording auxiliary layer;
Figures 4A and 4B illustrate a decrease in carrier-to-noise (C/N) ratio due to an increase in noise after time for reproduction has passed;
Figure 5 is a schematic diagram of a Super-RENS optical disc according to an embodiment of the present invention;
Figures 6A and 6B show RF signals reproduced from an initialized Super-RENS optical discs at different linear velocities according to aspects of the invention; and
Figures 7A and 7B show C/N characteristics of two Super-RENS optical discs having different recording auxiliary layers according to aspects of the invention.

Reference will now be made in detail to the embodiments of the present invention, examples of which are illustrated in the accompanying drawings, wherein like reference numerals refer to the like elements throughout. The embodiments are described below to explain the present invention by referring to the figures.

An optical disc with a super-resolution near-field structure (Super-RENS) according to an embodiment of the present invention uses a phase-change recording auxiliary layer in a crystalline state immediately after formation of the thin film.

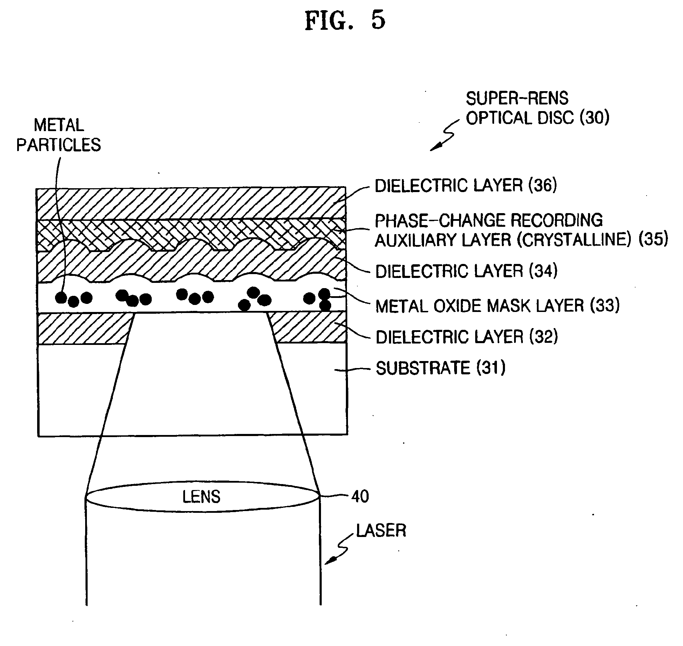

Figure 5 shows a Super-RENS optical disc 30 according to an embodiment of the present invention. Referring to Figure 5, the Super-RENS optical disc 30 includes a substrate 31, a metal oxide mask layer 33 and a phase-change recording auxiliary layer 35 sequentially formed over the substrate 31. The Super-RENS optical disc 30 further has dielectric layers 32, 34, and 36 formed between the substrate 31 and the metal oxide mask layer 33, between the metal oxide mask layer 33 and the phase-change auxiliary layer 35, and on the phase-change auxiliary layer 35, respectively.

The substrate 31 is made from a material providing excellent transparency, impact and heat resistance, and rigidity at a wavelength of a recording laser. The material is selected among those that can form the substrate 31 using a commonly manufacturing method such as injection molding. Examples of those materials include polycarbonate, polymetyl metacrylate, epoxy, polyester, and amorphous polyolefin. The metal oxide mask layer 33 may be made from silver oxide (AgOₓ) or platinum oxide (PtOₓ) as in a conventional optical disc, or other metal oxide. The phase-change recording auxiliary layer 35 is formed from a highly crystalline material. The highly crystalline material refers to a material that can be heated beyond the crystallization temperature into an amorphous phase and then rapidly changed back to a crystalline phase. The highly crystalline material may be antimony telluride (Sb₂Te₃) or Sb. The phase-change recording auxiliary layer 35 made from Sb₂Te₃ or Sb is in a crystalline state immediately after its formation.

Since the crystallization temperature of Sb₂Te₃ or Sb is very low, it is possible to rapidly crystallize Sb₂Te₃ or Sb by the kinetic energy of ions moving quickly from a target toward the Sb₂Te₃ or Sb thin film during sputtering for thin film formation so that it becomes crystalline immediately after formation of the thin film. As the content of Sb increases, the crystallization rate increases. Thus, the use of the Sb₂ Te₃ or Sb material in formation of the phase-change recording auxiliary layer 35 eliminates the need for a separate initialization.

Furthermore, when a reading beam is incident for reproduction after recording data, the phase-change recording auxiliary layer 35 undergoes a transition from the amorphous state to the crystalline state more quickly and completely than a conventional layer 15 made from an amorphous material. Thus, the Super-RENS optical disc 30 makes it possible to minimize the fluctuation of an RF signal during reproduction, thereby allowing uniform stable signal reproduction. Contrary to the optical disc 30 of an aspect of the present invention, a conventional Super-RENS disc 10 shown in Figure 1 suffers fluctuation due to slow and incomplete amorphous-to-crystalline phase transition. The highly crystalline material of the present invention is not limited to Sb₂Te₃ or Sb, but may include various other materials allowing quick crystallization.

For a conventional Super-RENS recording layer 15, since the as-deposited amorphous film has low reflectivity, an initialization process is required due to tracking servo failure. Since the phase-change recording auxiliary layer 15 undergoes incomplete transition to a crystalline state at high linear velocity of an optical disc 10 due to its low crystallization rate during initialization of the optical disc 10 for crystallization, a reproduced RF signal suffers from a large fluctuation. Thus, performing initialization at lower linear velocity allows considerably more stable RF signal reproduction according to an aspect of the invention.

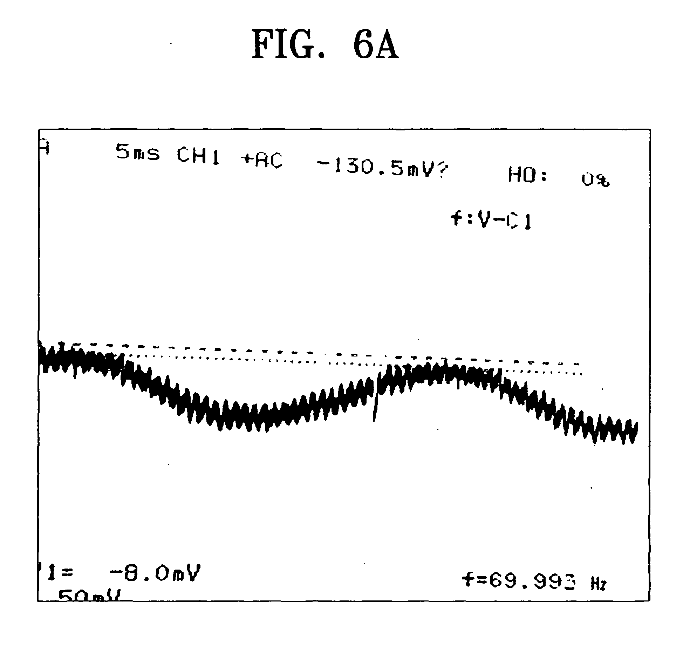

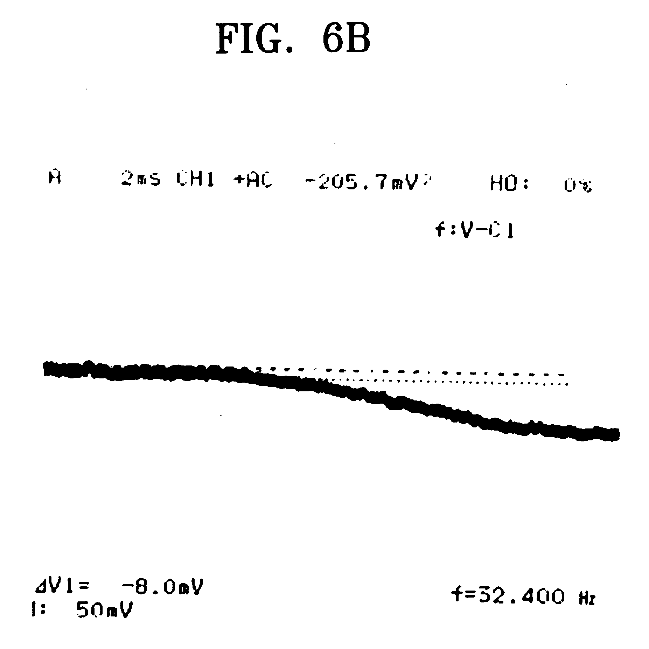

Figures 6A and 6B show RF signals reproduced from initialized Super RENS optical discs at linear velocities of 6 m/s and 3 m/s, respectively. As seen from Figures 6A and 6B, the RF signal reproduced from the initialized optical disc 30 at the linear velocity of 3 m/s is more stable than the RF signal at 6 m/s.

The same problem may occur upon reproduction after data has been recorded. That is, the phase-change recording layer undergoes transition to an amorphous state after data has been recorded. When a relatively high readout laser power is applied upon reproduction because of characteristics of a Super-RENS optical disc, the amorphous state is changed back to a crystalline state, which aggravates instability in the reproduced signal.

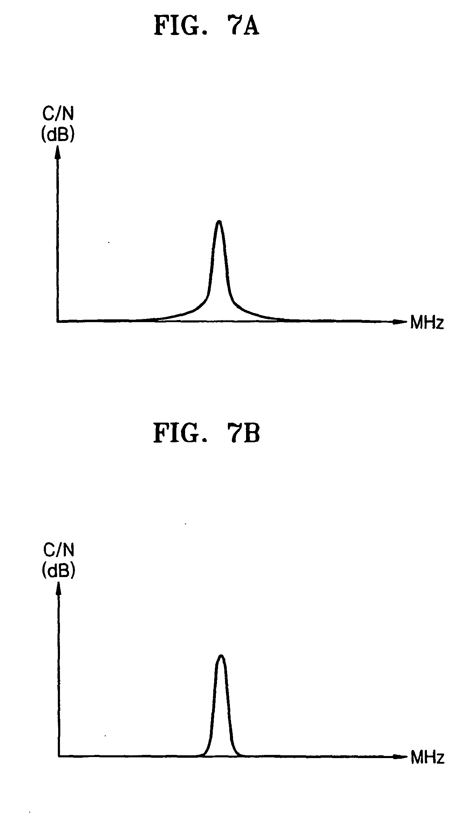

Figures 7A and 7B illustrate C/N characteristics measured on two Super-RENS optical discs having recording auxiliary layers with different crystallization rates using a spectrum analyzer. More specifically, Figure 7A shows the C/N characteristic of an optical disc using a phase-change recording auxiliary layer containing 60 atomic percent of Sb, while Figure 7B shows the C/N characteristic of an optical disc using a phase-change recording layer containing 70 atomic percent of Sb. Since the higher the content ratio of Sb, the higher the crystallization rate at the same linear velocity, the auxiliary layer containing 70 atomic percent of Sb exhibits better C/N characteristics than the auxiliary layer containing 60 atomic percent.

Thus, upon comparison between graphs of Figures 7A and 7B, C/N characteristics of the optical disc shown in Figure 7B change more sharply than those shown in Figure 7A. This implies that the higher content ratio of Sb increases the reaction rate of the phase-change recording and thus the data transfer rate.

Meanwhile, the phase-change recording auxiliary layer 35 may be used in, for example, rewritable, write-once, and read-only discs. Moreover, the layer 35 can be used in other optical disc types, such as in Bluray or Advanced Optical Discs (AODs). The auxiliary layer 35 can also be applied to single-sided dual-layer, double-sided single-layer, and double-sided dual-layer discs. Furthermore, the Super-RENS optical disc 30 may include a plurality of metal oxide mask layers 33 or a plurality of phase-change recording auxiliary layers 35.

As described above, the Super-RENS optical disc of the present invention has, among others, the following advantages. First, quality of a reproduced signal is improved by removing signal instability and unevenness that may occur due to incomplete crystallization of the phase-change recording auxiliary layer during reproduction of data. Second, high data transfer rate is allowed by minimizing a decrease in a C/N response rate due to a phase transition that the phase-change recording auxiliary layer undergoes during reproduction of data. Third, no initialization is required so low manufacturing costs and high production yields are allowed since the phase-change recording auxiliary layer is in a crystalline state immediately after its formation.

While the present invention has been particularly shown and described with reference to exemplary embodiments thereof, it will be understood by those of ordinary skill in the art that various changes in form and details may be made therein without departing from the spirit and scope of the present invention as defined by the following claims and equivalents thereof.

## Claims

1. An optical disc having multi-layers formed on a substrate (31) on which information is written by a beam, comprising:
one or more mask layers (33) having a super-resolution near-field structure; and
one or more phase-change recording auxiliary layers (35), each recording auxiliary layer (35) having been deposited as a highly crystalline material.

2. The optical disc of claim 1, wherein the phase-change recording auxiliary layer (35) is in a crystalline state.

3. The optical disc of claim 1 or 2, wherein the highly crystalline material is antimony telluride (Sb₂Te₃) or Sb.

4. The optical disc of claim 1, 2 or 3, wherein the phase-change recording auxiliary layer (35) changes from an amorphous phase to a crystalline phase.

5. The optical disc of claim 3, wherein the Sb₂Te₃ or Sb are crystallized by kinetic energy of ions moving from a target toward the Sb₂Te₃ or Sb during thin film formation.

6. The optical disc of claim 3, wherein the highly crystalline material eliminates initialization of the optical disc.

7. The optical disc of any preceding claim, wherein fluctuation of an RF signal during data reproduction is minimized.

8. The optical disc of any preceding claim, wherein the phase-change auxiliary layer (35) is rewritable.

9. The optical disc of any preceding claim, wherein the phase-change auxiliary layer (35) is applied to single-sided dual-layer, double-sided single-layer and double-sided dual-layer optical discs.

10. The optical disc of any preceding claim, wherein the highly crystalline material contains more than 60 atomic percent of Sb.

11. An optical disc comprising:
a substrate (31);
a metal oxide mask layer (33) formed on the substrate (31);
a phase-change recording auxiliary layer (35) formed on the metal oxide mask layer (33); and
dielectric layers (32,34) formed between the substrate (31), the metal oxide mask layer (33), and the phase-change auxiliary layer (35), the phase-change recording auxiliary layer (35) having been deposited as a highly crystalline material.

12. The optical disc of claim 11, wherein the highly crystalline material is antimony telluride (Sb₂Te₃) or Sb.

13. The optical disc of claim 11 or 12, wherein the phase-change recording auxiliary layer (35) is heated beyond a crystallization temperature into an amorphous phase and then changed back to a crystalline phase.

14. The optical disc of claim 12 or 13, wherein the Sb₂Te₃ or Sb are crystallized by kinetic energy of ions moving from a target toward the Sb₂Te₃ or Sb during thin film formation.

15. The optical disc of claim 12, 13 or 14, wherein the highly crystalline material eliminates a need for initialization of the optical disc.

16. The optical disc of any of claims 11 to 15, wherein fluctuation of an RF signal during data reproduction is minimized.

17. The optical disc of any of claims 11 to 16, wherein the disc is a rewritable disc.

18. The optical disc of any of claims 11 to 17, wherein the disc is one of a single-sided dual-layer disc, double-sided single-layer disc and double-sided dual-layer optical disc.

19. The optical disc of any of claims 11 to 18, wherein the highly crystalline material contains more than 60 atomic percent of Sb.

20. A method of forming an optical disc, the method comprising:
forming a metal oxide mask layer (33) on a substrate (31);
forming a phase-change recording auxiliary layer (35) on the metal oxide mask layer (33); and
forming dielectric layers (32,34) between the substrate (31) and the metal oxide mask layer (33), between the metal oxide mask layer (33) and the phase-change auxiliary layer (35), and on the phase-change auxiliary layer (35), wherein the phase-change recording auxiliary layer (35) is deposited in the form of a highly crystalline material.

21. The method of claim 20, wherein the phase-change recording auxiliary layer (35) is in a crystalline state after being formed.

22. The method of claim 20 or 21, wherein the highly crystalline material is antimony telluride (Sb₂Te₃) or Sb.

23. The method of claim 20, 21 or 22, wherein the phase-change recording auxiliary layer (35) is heated beyond a crystallization temperature into an amorphous phase and then changed back to a crystalline phase.

24. The method of claim 22, wherein the sb₂Te₃ or Sb are crystallized by kinetic energy of ions moving from a target toward the Sb₂Te₃ or Sb during thin film formation.

25. The method of claim 22, wherein use of the highly crystalline material in the formation of the phase-change recording auxiliary layer (35) eliminates a need for initialization of the disc.

26. The method of any of claims 20 to 25, wherein fluctuation of an RF signal during data reproduction is minimized.

27. The method of any of claims 20 to 26, wherein the highly crystalline material contains more than 60 atomic percent of Sb.

## Patentansprüche

1. Optische Platte mit mehreren auf einem Substrat (31) ausgebildeten Schichten, auf die Informationen mit einem Strahl geschrieben werden, umfassend:
eine oder mehrere Maskenebenen (33) mit einer Hochauflösungs-Nahfeldstruktur; und
eine oder mehrere Phasenänderungsverfahrens-Hilfsschichten (35), wobei jede Phasenänderungsverfahrens-Hilfsschicht (35) als ein hochkristallines Material aufgebracht wurde.

2. Optische Platte nach Anspruch 1, wobei sich die Phasenänderungsverfahrens-Hilfsschicht (35) in einem kristallinen Zustand befindet.

3. Optische Platte nach Anspruch 1 oder 2, wobei das hochkristalline Material Antimontellurid (Sb₂Te₃) oder Sb ist.

4. Optische Platte nach Anspruch 1, 2 oder 3, wobei die Phasenänderungsverfahrens-Hilfsschicht (35) von einer amorphen Phase zu einer kristallinen Phase wechselt.

5. Optische Platte nach Anspruch 3, wobei das Sb₂Te₃ oder Sb durch kinetische Energie von lonen, die sich während der Dünnfilmbildung von einem Target zu dem Sb₂Te₃ oder Sb hin bewegen, kristallisiert wird.

6. Optische Platte nach Anspruch 3, wobei das hochkristalline Material Initialisierung der optischen Platte beseitigt.

7. Optische Platte nach einem vorhergehenden Anspruch, wobei Schwankung eines Hochfrequenz-Signals bei der Datenreproduktion auf ein Minimum verringert wird.

8. Optische Platte nach einem vorhergehenden Anspruch, wobei die Phasenänderungs-Hilfsschicht (35) wiederbeschreibbar ist.

9. Optische Platte nach einem vorhergehenden Anspruch, wobei die Phasenänderungs-Hilfsschicht (35) auf optische Platten mit einseitiger Doppelschicht, doppelseitiger Einzelschicht und doppelseitiger Doppelschicht aufgetragen wird.

10. Optische Platte nach einem vorhergehenden Anspruch, wobei das hochkristalline Material mehr als 60 Atomprozent Sb enthält.

11. Optische Platte, umfassend:
ein Substrat (31);
eine Metalloxid-Maskenebene (33), die auf dem Substrat (31) ausgebildet ist;
eine Phasenänderungsverfahrens-Hilfsschicht (35), die auf der Metalloxid-Maskenebene (33) ausgebildet ist; und
dielektrische Schichten (32, 34), die zwischen dem Substrat (31), der Metalloxid-Maskenebene (33) und der Phasenänderungs-Hilfsschicht (35) ausgebildet sind, wobei die Phasenänderungsverfahrens-Hilfsschicht (35) als ein hochkristallines Material aufgebracht wurde.

12. Optische Platte nach Anspruch 11, wobei das hochkristalline Material Antimontellurid (Sb₂Te₃) oder Sb ist.

13. Optische Platte nach Anspruch 11 oder 12, wobei die Phasenänderungsverfahrens-Hilfsschicht (35) über eine Kristallisationstemperatur hinaus in eine amorphe Phase hinein erwärmt wird und dann zurück zu einer kristallinen Phase geändert wird.

14. Optische Platte nach Anspruch 12 oder 13, wobei das Sb₂Te₃ oder Sb durch kinetische Energie von lonen, die sich während der Dünnfilmbildung von einem Target zu dem Sb₂Te₃ oder Sb hin bewegen, kristallisiert wird.

15. Optische Platte nach Anspruch 12, 13 oder 14, wobei das hochkristalline Material einen Bedarf für initialisierung der optischen Platte beseitigt.

16. Optische Platte nach einem der Ansprüche 11 bis 15, wobei Schwankung eines Hochfrequenz-Signals bei der Datenreproduktion auf ein Minimum verringert wird.

17. Optische Platte nach einem der Ansprüche 11 bis 16, wobei die Platte eine wiederbeschreibbare Platte ist.

18. Optische Platte nach einem der Ansprüche 11 bis 17, wobei die Platte eine von einer Platte mit einseitiger Doppelschicht, einer Platte mit doppelseitiger Einzelschicht und einer optischen Platte mit doppelseitiger Doppelschicht ist.

19. Optische Platte nach einem der Ansprüche 11 bis 18, wobei das hochkristalline Material mehr als 60 Atomprozent Sb enthält.

20. Verfahren zum Ausbilden einer optischen Platte, wobei das Verfahren Folgendes umfasst:
Ausbilden einer Metalloxid-Maskenebene (33) auf einem Substrat (31);
Ausbilden einer Phasenänderungsverfahrens-Hilfsschicht (35) auf der Metalloxid-Maskenebene (33); und
Ausbilden von dielektrischen Schichten (32, 34) zwischen dem Substrat (31) und der Metalloxid-Maskenebene (33), zwischen der Metalloxid-Maskenebene (33) und der Phasenänderungs-Hilfsschicht (35) und auf der Phasenänderungs-Hilfsschicht (35), wobei die Phasenänderungsverfahrens-Hilfsschicht (35) in der Form eines hochkristallinen Materials aufgebracht wird.

21. Verfahren nach Anspruch 20, wobei sich die Phasenänderungsverfahrens-Hilfsschicht (35) nach ihrer Ausbildung in einem kristallinen Zustand befindet.

22. Verfahren nach Anspruch 20 oder 21, wobei das hochkristalline Material Antimontellurid (Sb₂Te₃) oder Sb ist.

23. Verfahren nach Anspruch 20, 21 oder 22, wobei die Phasenänderungsverfahrens-Hilfsschicht (35) über eine Kristallisationstemperatur hinaus in eine amorphe Phase hinein erwärmt wird und dann zurück zu einer kristallinen Phase geändert wird.

24. Verfahren nach Anspruch 22, wobei das Sb₂Te₃ oder Sb durch kinetische Energie von lonen, die sich während der Dünnfilmbildung von einem Target zu dem Sb₂Te₃ oder Sb hin bewegen, kristallisiert wird.

25. Verfahren nach Anspruch 22, wobei die Verwendung des hochkristallinen Materials bei der Ausbildung der Phasenänderungsverfahrens-Hilfsschicht (35) einen Bedarf für Initialisierung der Platte beseitigt.

26. Verfahren nach einem der Ansprüche 20 bis 25, wobei Schwankung eines Hochfrequenz-Signals bei der Datenreproduktion auf ein Minimum verringert wird.

27. Verfahren nach einem der Ansprüche 20 bis 26, wobei das hochkristalline Material mehr als 60 Atomprozent Sb enthält.

## Revendications

1. Disque optique ayant plusieurs couches formées sur un substrat (31), sur lequel des informations sont inscrites par un faisceau, comprenant :
une ou plusieurs couches de masque (33) ayant une structure de champ proche à super-résolution, et
une ou plusieurs couches auxiliaires d'enregistrement à changement de phase (35), chaque couche auxiliaire d'enregistrement (35) ayant été déposée sous la forme d'un matériau fortement cristallin.

2. Disque optique selon la revendication 1, dans lequel la couche auxiliaire d'enregistrement à changement de phase (35) est dans un état cristallin.

3. Disque optique selon la revendication 1 ou 2, dans lequel le matériau fortement cristallin est le tellurure d'antimoine (Sb₂Te₃) ou le Sb.

4. Disque optique selon la revendication 1, 2 ou 3, dans lequel la couche auxiliaire d'enregistrement à changement de phase (35) passe d'une phase amorphe à une phase cristalline.

5. Disque optique selon la revendication 3, dans lequel le Sb₂Te₃ ou le Sb sont cristallisés par l'énergie cinétique d'ions se déplaçant depuis une cible vers le Sb₂Te₃ ou le Sb pendant une formation de couche mince.

6. Disque optique selon la revendication 3, dans lequel le matériau fortement cristallin élimine l'initialisation du disque optique.

7. Disque optique selon l'une quelconque des revendications précédentes, dans lequel la fluctuation d'un signal RF pendant la lecture des données est minimisée.

8. Disque optique selon l'une quelconque des revendications précédentes, dans lequel la couche auxiliaire à changement de phase (35) est réinscriptible.

9. Disque optique selon l'une quelconque des revendications précédentes, dans lequel la couche auxiliaire à changement de phase (35) est appliquée sur des disques optiques à double couche sur une face, à simple couche sur deux faces et à double couche sur deux faces.

10. Disque optique selon l'une quelconque des revendications précédentes, dans lequel le matériau fortement cristallin contient plus de 60% en atomes de Sb.

11. Disque optique comprenant :
un substrat (31),
une couche de masque en oxyde métallique (33), formée sur le substrat (31);
une couche auxiliaire d'enregistrement à changement de phase (35) formée sur la couche de masque en oxyde métallique (33), et
des couches diélectriques (32, 34), formées entre le substrat (31), la couche de masque en oxyde métallique (33), et la couche auxiliaire d'enregistrement à changement de phase (35), la couche auxiliaire à changement de phase (35) ayant été déposée sous la forme d'un matériau fortement cristallin.

12. Disque optique selon la revendication 11, dans lequel le matériau fortement cristallin est le tellurure d'antimoine (Sb₂Te₃) ou le Sb.

13. Disque optique selon la revendication 11 ou 12, dans lequel la couche auxiliaire d'enregistrement à changement de phase (35) est chauffée au-delà d'une température de cristallisation en une phase amorphe, puis est ramenée à une phase cristalline.

14. Disque optique selon la revendication 12 ou 13, dans lequel le Sb₂Te₃ ou le Sb sont cristallisés par l'énergie cinétique d'ions se déplaçant depuis une cible vers le Sb₂Te₃ ou le Sb pendant une formation de couche mince.

15. Disque optique selon la revendication 12, 13 ou 14, dans lequel le matériau fortement cristallin élimine la nécessité d'une initialisation du disque optique.

16. Disque optique selon l'une quelconque des revendications 11 à 15, dans lequel la fluctuation d'un signal RF pendant la lecture des données est minimisée.

17. Disque optique selon l'une quelconque des revendications 11 à 16, dans lequel le disque est un disque réinscriptible.

18. Disque optique selon l'une quelconque des revendications 11 à 17, dans lequel le disque est un disque à double couche sur une face, à simple couche sur deux faces et à double couche sur deux faces.

19. Disque optique selon l'une quelconque des revendications 11 à 18, dans lequel le matériau fortement cristallin contient plus de 60% en atomes de Sb.

20. Procédé de formation d'un disque optique, le procédé comprenant :
la formation d'une couche de masque en oxyde métallique (33) sur un substrat (31) ;
la formation d'une couche auxiliaire d'enregistrement à changement de phase (35) sur la couche de masque en oxyde métallique (33), et
la formation de couches diélectriques (32, 34), entre le substrat (31) et la couche de masque en oxyde métallique (33), entre la couche de masque en oxyde métallique (33) et la couche auxiliaire à changement de phase (35), et sur la couche auxiliaire à changement de phase (35), la couche auxiliaire d'enregistrement à changement de phase (35) ayant été déposée sous la forme d'un matériau fortement cristallin.

21. Procédé selon la revendication 20, dans lequel la couche auxiliaire d'enregistrement à changement de phase (35) est dans un état fortement cristallin après avoir été formée.

22. Procédé selon la revendication 20 ou 21, dans lequel le matériau fortement cristallin est le tellurure d'antimoine (Sb₂Te₃) ou le Sb.

23. Procédé selon la revendication 20, 21 ou 22, dans lequel la couche auxiliaire d'enregistrement à changement de phase (35) est chauffée au-delà d'une température de cristallisation en une phase amorphe, puis est ramenée à une phase cristalline.

24. Procédé selon la revendication 22, dans lequel le Sb₂Te₃ ou le Sb sont cristallisés par l'énergie cinétique d'ions se déplaçant depuis une cible vers le Sb₂Te₃ ou le Sb pendant une formation de couche mince.

25. Procédé selon la revendication 22, dans lequel l'utilisation du matériau fortement cristallin dans la formation de la couche auxiliaire d'enregistrement à changement de phase (35) élimine la nécessité d'une initialisation du disque optique.

26. Procédé selon l'une quelconque des revendications 20 à 25, dans lequel la fluctuation d'un signal RF pendant la lecture des données est minimisée.

27. Procédé selon l'une quelconque des revendications 20 à 26, dans lequel le matériau fortement cristallin contient plus de 60% en atomes de Sb.
